# EUROPÄISCHE PATENTSCHRIFT

(11) **EP 2 638 270 B1**
(45) Veröffentlichungstag und Bekanntmachung des Hinweises auf die Patenterteilung: **09.12.2020**
(21) Anmeldenummer: 11773407.9
(22) Anmeldetag: 19.10.2011
(51) Int. Cl.: F02D 41/00, F02D 41/14, F02D 41/24, F02D 41/22

(54) **VERFAHREN ZUR KORREKTUR EINES LUFT-KRAFTSTOFF-GEMISCH-FEHLERS**
METHOD OF CORRECTION OF AN ERROR IN THE AIR-FUEL MIXTURE
PROCÉDÉ DE CORRECTION D'UN ERREUR DE COMPOSITION AIR-CARBURANT

(30) Priorität: 11.11.2010 DE 102010051035
(43) Veröffentlichungstag der Anmeldung: 18.09.2013
(73) Patentinhaber: Daimler AG, 70372 Stuttgart (DE)
(72) Erfinder: DEUBLER, Patrick, 71069 Sindelfingen (DE); DIETZEL, Kay, 73240 Wendlingen (DE); KAISER, Thomas, 73770 Denkendorf (DE); HOHNER, Peter, 70619 Stuttgart (DE)
(74) Vertreter: JENSEN & SON
(86) Internationale Anmeldenummer: PCT/EP2011/005260
(87) Internationale Veröffentlichungsnummer: WO 2012/062402

(56) Entgegenhaltungen:
- EP-A2- 1 132 600
- WO-A1-01/59282
- WO-A1-2008/009499
- DE-A1- 10 339 251
- DE-A1-102004 044 808

## Beschreibung

Die Erfindung betrifft ein Verfahren zur Korrektur eines Luft-Kraftstoff-Gemisch-Fehlers eines Zylinders eines Verbrennungsmotors eines Kraftfahrzeuges.

Die gattungsgemäße DE 102004044808 A1 beschreibt ein Verfahren zum Erkennen von zylinderindividuellen Kraftstoff-Luft-Gemischfehlern eines Verbrennungsmotors. Dabei wird in einem ersten Verfahrensschritt eine Einzelzylinder-Lambdaregelung vorgenommen und in einem weiteren Verfahrensschritt Korrekturen an zylinderindividuellen Zündwinkeln vorgenommen.

Das genannte Verfahren berücksichtigt jedoch nicht die unterschiedlichen Aspekte, die an ein solches Korrekturverfahren im Hinblick auf einerseits Komfortanforderungen und andererseits Abgasqualitätsanforderungen gestellt werden.

Des Weiteren offenbart die WO 01/59282 A1 ein Verfahren zur Bestimmung zylinderindividueller Unterschiede einer Steuergröße bei einer mehrzylindrigen Brennkraftmaschine, wobei eine Bestimmung zylinderindividueller Füllungsunterschiede vorgesehen ist.

Aufgabe der vorliegenden Erfindung ist es, das gattungsgemäße Verfahren hinsichtlich seiner Effizienz zu verbessern, wobei sowohl Komfortanforderungen als auch Abgasqualitätsanforderungen mit einem möglichst geringen Aufwand erfüllt werden sollen.

Die Aufgabe wird erfindungsgemäß gelöst durch ein Verfahren mit den Merkmalen des unabhängigen Anspruchs 1. Vorteilhafte Weiterbildungen der Erfindung ergeben sich aus den Unteransprüchen.

Das Verfahren zur Korrektur einer Einspritzmenge im Falle eines Luftpfadfehlers eines Zylinders eines Verbrennungsmotors eines Kraftfahrzeugs bestimmt eine Art eines Luft-Kraftstoff-Gemisch-Fehlers des Zylinders des Verbrennungsmotors des Kraftfahrzeuges. Dabei wird sowohl eine Momentengröße des Zylinders als auch eine Lambdagröße des Zylinders ermittelt. Die Momentengröße bedeutet dabei den Momentenbeitrag des Zylinders oder eine dem Momentenbeitrag des Zylinders proportionale Größe wie zum Beispiel eine auf den Zylinder bezogene Segmentzeit an einer Kurbelwelle des Verbrennungsmotors. Die Lambdagröße bedeutet dabei den Lambdawert des Zylinders, welcher zum Beispiel aus einer zylinderspezifischen Messung eines Sauerstoffgehaltes mittels einer Breitband-Lambdasonde ermittelt oder mittels einem durch die DE 102007043734 A1 beschriebenen Verfahren abgeschätzt werden kann. Die Momentengröße und die Lambdagröße werden unter definierten Betriebsbedingungen des Verbrennungsmotors ermittelt.

Außerdem wird eine Momenten-Referenzgröße ermittelt. Die Momenten-Referenzgröße bedeutet dabei zum Beispiel einen Momentenbeitrag des Zylinders in einem Neuzustand, beziehungsweise in einem nicht defekten Zustand, unter definierten Betriebsbedingungen des Verbrennungsmotors. Die Momenten-Referenzgröße kann alternativ zum Beispiel auch einen durchschnittlichen Momentenbeitrag aller Zylinder des Verbrennungsmotors oder einen durchschnittlichen Momentenbeitrag einer Auswahl an Zylindern des Verbrennungsmotors bedeuten.

Außerdem wird eine Lambda-Referenzgröße ermittelt. Die Lambda-Referenzgröße bedeutet dabei zum Beispiel den Lambdawert des Zylinders in einem Neuzustand beziehungsweise in einem nicht defekten Zustand, unter definierten Betriebsbedingungen des Verbrennungsmotors. Die Lambda-Referenzgröße kann alternativ zum Beispiel auch den durchschnittlichen Lambdawert aller Zylinder des Verbrennungsmotors oder den durchschnittlichen Lambdawert einer Auswahl an Zylindern des Verbrennungsmotors bedeuten.

Erfindungsgemäß wird sowohl die ermittelte Momentengröße des Zylinders mit der Momenten-Referenzgröße verglichen als auch die ermittelte Lambdagröße mit der Lambda-Referenzgröße verglichen.

Die Momenten-Referenzgröße und die Lambda-Referenzgröße sind jeweils Größen, die einen nicht defekten Zustand eines Zylinders zumindest näherungsweise charakterisieren. Wenn bekannt ist, ob sich die Lambdagröße eines Zylinders, unter definierten Betriebsbedingungen, ausgehend von einem nicht defekten Zustand des Verbrennungsmotors in Richtung fett oder in Richtung mager verschoben hat, und wenn gleichzeitig bekannt ist, ob sich die Momentengröße eines Zylinders, unter definierten Betriebsbedingungen, ausgehend von dem nicht defekten Zustand des Verbrennungsmotors in Richtung eines höheren Momentenbeitrags oder eines geringeren Momentenbeitrags verschoben hat, so kann innerhalb gewisser Grenzen zwischen einem Luftpfadfehler und einem Kraftstoffpfadfehler des Zylinders unterschieden und jeweils ein entsprechender Fehlereintrag in einem Speicher eines dem Verbrennungsmotor zugeordneten Steuergerätes abgelegt werden.

Mit dem Luftpfadfehler ist eine fehlerhafte Abweichung einer Ist-Luftmengenzufuhr von einer Soll-Luftmengenzufuhr zu dem Zylinder gemein.

Dabei ist es im Falle eines Luftpfadfehlers nicht möglich, durch eine Korrektur der Kraftstoffmenge alleine sowohl die Momentengrößen als auch die Lambdagrößen gleichzustellen.

Das Verfahren zeichnet sich erfindungsgemäß dadurch aus, dass eine Einspritzmenge des Zylinders korrigiert wird, wobei
- bei einem Luftpfadfehler mit einer geringen Abweichung der Lambdagröße des Zylinders von der Lambda-Referenzgröße bis zu einer Grenzabweichung der Lambdagröße von der Lambda-Referenzgröße die Einspritzmenge des Zylinders in Abhängigkeit von dem Luftpfadfehler zu einer Annäherung und/oder einer Gleichstellung eines Momentenbeitrages des Zylinders in Bezug auf Momentenbeiträge der anderen Zylinder des Verbrennungsmotors unter einer Erhöhung der Abweichung der Lambdagroße des Zylinders von der Lambda-Referenzgröße in Bezug auf Lambdagrößen von anderen Zylindern des Verbrennungsmotors verändert wird,
- bei einem Luftpfadfehler mit der Grenzabweichung der Lambdagroße des Zylinders von der Lambda-Referenzgröße die Einspritzmenge des Zylinders in Abhängigkeit von dem Luftpfadfehler zu einer Konstanthaltung der Lambdagroße verändert wird.

Mit dem Luftpfadfehler ist eine fehlerhafte Abweichung einer Ist-Luftmengenzufuhr von einer Soll-Luftmengenzufuhr zu dem Zylinder gemeint.

Mit der Lambdagroße des Zylinders ist ein Lambdawert des Zylinders oder ein von dem Lambdawert direkt abhängiger Wert gemeint. Mit dem Lambdawert ist bekanntermaßen ein Stoffmengen-Verhältnis von Luft zu Kraftstoff gemeint. Ein Fehler in dem Luftpfad des Zylinders wirkt sich in zweierlei Hinsicht aus: zum einen ändert sich die Lambdagroße des Zylinders, was zu einer Verschlechterung einer Qualität eines Abgases des Verbrennungsmotors führt, zum anderen ändert sich ein Momentenbeitrag des Zylinders, was zu einer Verschlechterung der Laufruhe des Verbrennungsmotors führt.

Bei einer Korrektur des Luftpfadfehlers des Zylinders über einen Kraftstoffpfad des Zylinders kann entweder die Lambdagroße in Richtung ihres ursprünglichen Wertes korrigiert werden oder der Momentenbeitrag in Richtung seines ursprünglichen Wertes geändert werden. Beides, die Korrektur der Lambdagroße in Richtung ihres ursprünglichen Wertes und die Korrektur des Momentenbeitrages in Richtung seines ursprünglichen Wertes, ist, im Falle des Luftpfadfehlers und der Korrektur über eine Anpassung der Kraftstoffmenge, gleichzeitig nicht möglich.

Bei einem schleichend sich steigernden Luftpfadfehler sieht das Verfahren erfindungsgemäß vor, bei geringen Luftpfadfehlern des Zylinders aus Gründen der Komfortverbesserung eine Änderung des Momentenbeitrags des Zylinders in Richtung seines ursprünglichen Wertes zu bewirken, und zwar durch eine entsprechende Änderung einer Zufuhr der Kraftstoffmenge zu dem Zylinder. So wird bei einem Minderluftfehler des Zylinders die Kraftstoffzufuhr beziehungsweise eine Einspritzmenge beziehungsweise eine Einspritzzeit des Zylinders erhöht, damit der durch den Minderluftfehler erniedrigte Momentenbeitrag des Zylinders wieder in Richtung seines ursprünglichen Wertes geändert wird. Bei einem Mehrluftfehler des Zylinders wird die Kraftstoffzufuhr beziehungsweise die Einspritzmenge beziehungsweise die Einspritzzeit des Zylinders erniedrigt, damit der durch den Mehrluftfehler erhöhte Momentenbeitrag des Zylinders wieder in Richtung seines ursprünglichen Wertes geändert wird. Sowohl bei dem Minderluftfehler als auch bei dem Mehrluftfehler führt diese Änderung der Kraftstoffmenge des Zylinders zur Momentenannäherung allerdings jeweils zu einem Wert der Lambdagroße des Zylinders, welche nach der Korrektur weiter von einem ursprünglichen Wert entfernt ist als vor der Korrektur. Das heißt: die Korrektur zur Verbesserung der Laufruhe führt im Falle eines Luftpfadfehlers zu einer Abgasverschlechterung des Verbrennungsmotors.

Ein solcher erster Korrekturmodus ist nur sinnvoll so lange ein Abgasgrenzwert des Verbrennungsmotors bzw. ein Grenzwert der Lambdagroße des Verbrennungsmotors nicht überschritten wird. Ein sinnvoller Grenzwert der Lambdagroße des Zylinders ist ein Wert, bei welchem sich das Abgas des Verbrennungsmotors so weit verschlechtert hat, dass spürbare Auswirkungen auf die Umwelt bestehen oder dass ein gesetzlicher Grenzwert überschritten wird. Wenn der Grenzwert der Lambdagroße erreicht ist, ändert sich erfindungsgemäß der Korrekturmodus der Kraftstoffzufuhr zu dem Zylinder zu einem zweiten Korrekturmodus, bei dem die Einspritzmenge des Zylinders so geändert wird, dass bei einem sich weiter steigernden Fehler des Luftpfades des Zylinders die Abgasqualität konstant bei oder knapp unterhalb eines Abgasqualitätsgrenzwertes bleibt. Das heißt, dass sich die Lambdagroße des Zylinders bei dem ersten Korrekturmodus von dem ursprünglichen Wert entfernt und bei dem zweiten Korrekturmodus im Wesentlichen konstant bei einem Grenzwert bleibt. Während des ersten Korrekturmodus ändert sich der Momentenbeitrag des Zylinders im Wesentlichen nicht, während des zweiten Korrekturmodus entfernt sich der Momentenbeitrag des Zylinders von seinem ursprünglichen Wert umso mehr, je größer im zweiten Korrekturmodus ein Ausmaß des Luftpfadfehlers wird.

Eine vorteilhafte Weiterbildung des erfindungsgemäßen Verfahrens sieht vor, dass bei Vorliegen eines Luftpfadfehlers, der so groß ist, dass der Grenzwert der Lambdagroße erreicht ist, ein komfortrelevanter Fehler des Luftpfades des Zylinders gesetzt wird. Bei Erreichen des Grenzwertes der Lambdagroße kann ein Zielwert der Laufruhe nicht mehr eingehalten werden, so dass ein Setzen eines Fehlers in Form einer Speicherung eines Fehlereintrages in einem Fehlerspeicher vorteilhaft ist.
Wenn der Luftpfadfehler sich so weit erhöht, dass eine Konstanthaltung der Lambdagroße bei dem Grenzwert durch die Änderung der Kraftstoffzufuhr zu dem Zylinder nicht mehr möglich ist, so dass eine Überschreitung des Grenzwertes der Lambdagröße erfolgt, so wird ein abgasrelevanter Fehler des Luftpfades des Zylinders gesetzt. Aus derartigen Fehlerinformationen, welche auf bekannte Weise in einem Fehlerspeicher gespeichert werden, können in einer Werkstatt Informationen über Art, Ort und Ausmaß des jeweiligen Fehlers entnommen und eine Ursache des jeweiligen Fehlers abgeleitet werden.

In einer weiteren Weiterbildung des Verfahrens wird die Momentengröße des Zylinders aus einer Messung einer Laufruhe des Zylinders abgeleitet. Besonders einfach und damit vorteilhaft ist es dabei, die Momentengröße des Zylinders aus einer Messung einer Segmentzeit an einer Kurbelwelle des Verbrennungsmotors abzuleiten.

Die Momenten-Referenzgröße des Zylinders und die Lambda-Referenzgröße des Zylinders werden auf besonders einfache Weise jeweils von einem Durchschnittswert aller Zylinder des Verbrennungsmotors oder von einer Auswahl der Zylinder des Verbrennungsmotors abgeleitet. Eine sinnvolle Auswahl der Zylinder des Verbrennungsmotors ist diejenige Auswahl, die aus Zylindern mit ähnlichen Werten zur Durchschnittswert-Bildung besteht.

Eine besonders vorteilhafte Weiterbildung des erfindungsgemäßen Verfahrens sieht vor, dass
- bei einer Lambdagröße des Zylinders, die im Vergleich zu der Lambda-Referenzgröße des Zylinders in Richtung fett verschoben ist und zugleich einer Momentengröße des Zylinders, die im Vergleich zu der Momenten-Referenzgröße des Zylinders in Richtung niedrigerer Momentenbeitrag verschoben ist, ein Luftfehler, insbesondere ein Minderluftfehler, gesetzt wird, - bei einer Lambdagröße des Zylinders, die im Vergleich zu der Lambda-Referenzgröße des Zylinders in Richtung mager verschoben ist und zugleich einer Momentengröße des Zylinders, die im Vergleich zu der Momenten-Referenzgröße des Zylinders in Richtung höherem Momentenbeitrag verschoben ist, ein Luftfehler, insbesondere ein Mehrluftfehler, gesetzt wird,
- bei einer Lambdagröße des Zylinders, die im Vergleich zu der Lambda-Referenzgröße des Zylinders in Richtung mager verschoben ist und zugleich einer Momentengröße des Zylinders, die im Vergleich zu der Momenten-Referenzgröße des Zylinders in Richtung niedrigerem oder gleichem Momentenbeitrag verschoben ist, ein Kraftstofffehler, insbesondere ein MinderKraftstofffehler, gesetzt wird,
- bei einer Lambdagröße des Zylinders, die im Vergleich zu der Lambda-Referenzgröße des Zylinders in Richtung fett verschoben ist und zugleich einer Momentengröße des Zylinders, die im Vergleich zu der Momenten-Referenzgröße des Zylinders in Richtung höherem oder gleichem Momentenbeitrag verschoben ist, ein Kraftstofffehler, insbesondere ein Mehr-Kraftstofffehler, gesetzt wird.

Die oben verwendeten Begriffe "gleichzeitig" und "zugleich" bedeuten dabei, dass die betreffenden Informationen im gleichen Messzyklus ermittelt wurden. Ein Messzyklus kann sich dabei über einen oder mehrere Fahrzyklen erstrecken, je nachdem, ob die für die Messung notwendige Abfolge von Betriebsbedingungen in einem oder mehreren Fahrzyklen erfolgt ist. Ein Fahrzyklus bedeutet dabei einen Fahrzeugbetrieb zwischen einem Einschalten des Verbrennungsmotors und einem Ausschalten des Verbrennungsmotors.
Die genannten Größen und Referenzgrößen können bei variablen Betriebsbedingungen ermittelt werden, wobei Vergleiche vorzugsweise über solche Größen und ReferenzGrößen durchgeführt werden, die bei gleichen Betriebsbedingungen des Verbrennungsmotors ermittelt wurden.

Vorteilhafter Weise liegen dem Verfahren Grenzwerte zugrunde, die systemspezifisch ermittelt werden, wobei die Grenzwerte für unterschiedliche Betriebsbedingungen in Form von Kennfeldern in dem Speicher des Steuergerätes abgelegt sein können. So wird zum Beispiel eine Fett-Abweichung der Lambdagröße des Zylinders erst dann festgelegt, wenn ein Fett-Grenzwert für die Lambdagröße des Zylinders bei zugeordneten Betriebsbedingungen überschritten wird. Das gleiche Prinzip gilt vorteilhafter Weise auch für eine Mager-Abweichung der Lambdagröße sowie für die Abweichungen der Momentengröße.

Eine alternative Weiterbildung des Verfahrens sieht vor, dass
- in Abhängigkeit von einem Vergleich der Momentengröße mit der Momenten-Referenzgröße gemäß einem Momentengleichstellungsverfahren eine erste Einspritzmengen-Korrektur ermittelt wird und
- in Abhängigkeit von einem Vergleich der Lambdagröße mit der Lambda-Referenzgröße gemäß einem Lambdagleichstellungsverfahren eine zweite Einspritzmengen-Korrektur ermittelt wird und
- in Abhängigkeit von einem Vergleich der ersten Einspritzmengen-Korrektur mit der zweiten Einspritzmengen-Korrektur die Art des Luft-Kraftstoff-Gemisch-Fehlers gleich einem Kraftstoffpfadfehler des Zylinders oder gleich einem Luftpfadfehler des Zylinders gesetzt wird.

Auf diese Art und Weise können zwei an sich bekannte Gleichstellungsverfahren in vorteilhafter Weise weiterentwickelt werden. Die erfindungsgemäße Weiterentwicklung erlaubt bei Vorliegen einer Gemischabweichung in einem Zylinder des Verbrennungsmotors die Unterscheidung zwischen dem Kraftstoffpfadfehler des Zylinders und dem Luftpfadfehler des Zylinders. Die Unterscheidung ist möglich, wenn bei den zugrundeliegenden Momenten- und Lambda-Gleichstellungsverfahren jeweils eine Gemisch-Korrektur eines zu korrigierenden Zylinders ausschließlich bezogen auf dessen Kraftstoffpfad ermittelt wird, nämlich bezogen auf eine Korrektur der Einspritzmenge des Zylinders beziehungsweise eine Korrektur der Einspritzzeit des Zylinders.

Bei einem Kraftstoffpfadfehler des Zylinders führt eine auf den Kraftstoffpfad bezogene Korrektur dazu, dass der Zylinder nach der Korrektur nicht nur wieder das gleiche Lambda, das heißt das gleiche Luft/Kraftstoff-Verhältnis, wie die restlichen Zylinder aufweist, sondern auch die gleiche Kraftstoffmenge und die gleiche Luftmenge. Daher führt bei einem Kraftstoffpfadfehler eine Kraftstoffpfad-Korrektur gleichzeitig zu einer Lambdagleichstellung und einer Momentengleichstellung, da bei der Korrektur sowohl das Kraftstoff-Luft/Verhältnis als auch die Absolutmenge des Kraftstoffes korrigiert wird.

Bei einem Luftpfadfehler des Zylinders kann eine auf den Kraftstoffpfad des Zylinders bezogene Korrektur nicht gleichzeitig eine Lambdagleichstellung und eine Momentengleichstellung bewirken. Es zeigt sich, dass zum Beispiel bei einem MehrLuftfehler, d.h. bei einem Fehler des Luftpfades des Zylinders bei dem der Zylinder zu viel Luft erhält, ein Lambdagleichstellungsverfahren eine Kraftstoff pfad-Korrektur in Richtung einer Mehrlieferung an Kraftstoff bewirkt, um den ursprünglichen Lambdawert des Zylinders wieder herzustellen. Dem gegenüber wird in diesem Fall ein Momentengleichstellungsverfahren eine Kraftstoffpfad-Korrektur im Sinne einer Minderlieferung an Kraftstoff bewirken um den Momentenbeitrag, welcher durch den Luftüberschuss erhöht wurde, wieder auf den ursprünglichen Wert zu reduzieren.

Somit kann durch Ermittlung einer ersten Einspritzmengen-Korrektur des Zylinders zu einer Momentenannäherung und/oder Momentengleichstellung und einer zweiten Einspritzmengen-Korrektur des Zylinders zu einer Lambdaannäherung und/oder einer Lambdagleichstellung und durch einen Vergleich von der ersten Einspritzmengen-Korrektur mit der zweiten Einspritzmengen-Korrektur eine Entscheidung zwischen einem Luftpfad und einem Kraftstoffpfadfehler getroffen werden. Wenn die durch das Momentengleichstellungsverfahren ermittelte Einspritzmengen-Korrektur des Zylinders im Wesentlichen gleich der durch das Lambdagleichstellungsverfahren ermittelte Einspritzmengen-Korrektur ist, so liegt ein Kraftstoffpfadfehler vor. Wenn die durch das Momentengleichstellungsverfahren ermittelte Einspritzmengen-Korrektur des Zylinders im Wesentlichen ungleich der durch das Lambdagleichstellungsverfahren ermittelte Einspritzmengen-Korrektur ist, so liegt ein Luftpfadfehler vor.

Eine Weiterbildung des Verfahrens ermöglicht eine weitere Differenzierung hinsichtlich einer Fehlerursache. Dabei wird, wenn die erste Einspritzmengen-Korrektur im Wesentlichen größer als die zweite Einspritzmengen-Korrektur ist, die Art des Luft-Kraftstoff-Gemisch-Fehlers gleich einem Minderluft-Fehler gesetzt. Hingegen wenn die erste Einspritzmengen-Korrektur im Wesentlichen kleiner als die zweite Einspritzmengen-Korrektur ist, wird die Art des Luft-Kraftstoff-Gemisch-Fehlers gleich einem Mehrluft-Fehler gesetzt. Bei einem Minderluft-Fehler bewirkt eine Kraftstoffmengen-Korrektur im Sinne einer MomFentengleichstellung eine Erhöhung der Kraftstoffmenge und eine Kraftstoffmengen-Korrektur im Sinne einer Lambdagleichstellung eine Erniedrigung der Kraftstoffmenge. Bei einem Mehrluft-Fehler resultieren Korrekturmengen mit jeweils umgekehrten Vorzeichen.

Weitere Vorteile und Merkmale der Erfindung ergeben sich anhand der nachfolgenden Beschreibung von Ausführungsbeispielen sowie anhand der Zeichnungen, in denen gleiche Elemente mit identischen Bezugszeichen versehen sind.

Dabei zeigen
- Fig. 1: eine schematische Darstellung eines Verbrennungsmotors,
- Fig. 2: eine Beschreibung von Auswirkungen eines Kraftstoffpfadfehlers anhand eines Diagramms zur Darstellung einer Abhängigkeit eines Momentenbeitrages eines Zylinders von einem Lambdawert des Zylinders,
- Fig. 3: eine Beschreibung von Auswirkungen eines Luftpfadfehlers anhand eines Diagramms zur Darstellung einer Abhängigkeit eines Momentenbeitrages eines Zylinders von einem Lambdawert des Zylinders,
- Fig. 4: ein Ablaufdiagramm eines erfindungsgemäßen Verfahrens,
- Fig. 5: Diagramme zur Beschreibung von Verläufen von ausgewählten Parametern bei dem erfindungsgemäßen Verfahren.
- Fig. 6: eine Beschreibung von Auswirkungen eines Kraftstoffpfadfehlers unter Anwendung einer alternativen Ausführung des erfindungsgemäßen Verfahrens anhand eines Diagramms zur Darstellung einer Abhängigkeit eines Momentenbeitrages eines Zylinders von einem Lambdawert des Zylinders,
- Fig. 7: eine Beschreibung von Auswirkungen eines Luftpfadfehlers unter Anwendung der alternativen Ausführung des erfindungsgemäßen Verfahrens anhand eines Diagramms zur Darstellung einer Abhängigkeit eines Momentenbeitrages eines Zylinders von einem Lambdawert des Zylinders,
- Fig. 8: ein Ablaufdiagramm zur Beschreibung der alternativen Ausführung des erfindungsgemäßen Verfahrens,

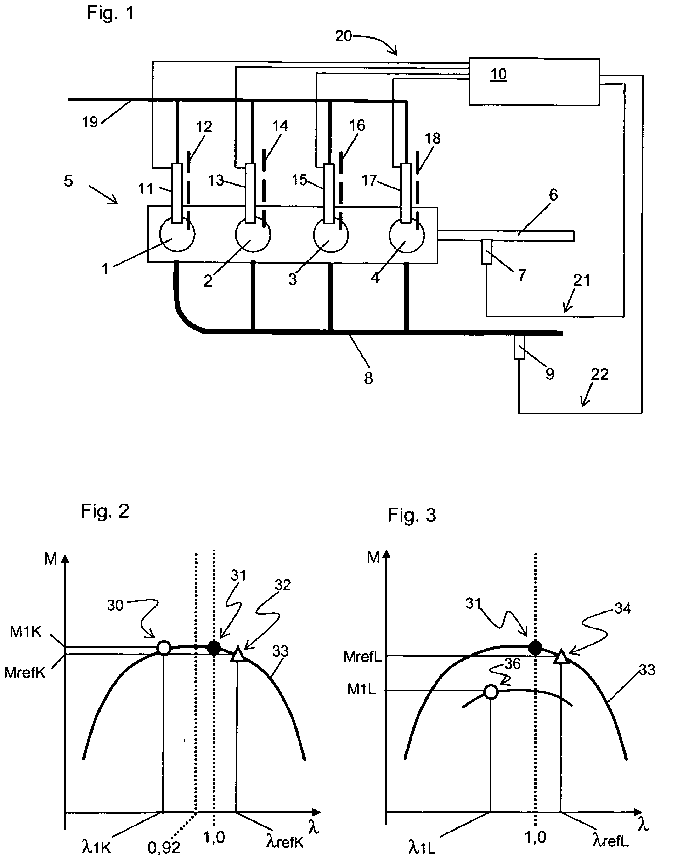

Fig. 1 zeigt eine schematische Darstellung eines Verbrennungsmotors 5 eines nicht näher dargestellten Fahrzeugs, welcher vier Zylinder 1 bis 4 aufweist, wobei mit den Zylindern 1, 2, 3, 4 jeweils ein Einspritzventil 11, 13, 15, 17 zur Einspritzung von Kraftstoff in den jeweiligen Zylinder 1, 2, 3, 4 sowie jeweils ein Luftpfad 12, 14, 16, 18 zur Zufuhr von Luft in den jeweiligen Zylinder verbunden ist. Die Einspritzventile 11, 13, 15, 17 sind mit einem Kraftstofffördersystem 19 verbunden. Eine Gesamtheit aus Kraftstofffördersystem 19 und einem Einspritzventil 11 oder 3 oder 15 oder 17 eines Zylinders 1 oder 2 oder 3 oder 4, wird als Kraftstoffpfad des jeweiligen Zylinders 1 oder 2 oder 3 oder 4 bezeichnet. Eine den Zylindern 1, 2, 3, 4 zugeführte Kraftstoffmenge ist jeweils über eine Steuerung einer Öffnungszeit des jeweiligen Einspritzventils 11, 13, 15, 17 beeinflussbar. Die Öffnungszeit eines Einspritzventils wird auch als Einspritzzeit bezeichnet. Die Steuerung der Einspritzzeiten der Einspritzventile 11, 13, 15, 17 erfolgt über ein Motorsteuergerät 10, welches über Steuerleitungen 20 mit den Einspritzventilen 11, 13, 15, 17 verbunden ist.

Der Verbrennungsmotor 5 weist ferner eine Kurbelwelle 6 auf, welche einen Geber 7 zur Messung von Segmentzeiten aufweist. Der Geber 7 ist über eine Signalleitung 21 mit dem Motorsteuergerät 10 verbunden. Die Messung von Segmentzeiten dient einer Auswertung eines zeitlichen Verlaufs einer Drehbewegung der Kurbelwelle 6 des Verbrennungsmotors 5. Segmentzeiten sind die Zeiten, in denen die Kurbel- oder Nockenwelle einen vorbestimmten Winkelbereich überstreicht, der einem bestimmten Zylinder zugeordnet ist. Aus der Messung der Segmentzeiten werden im Motorsteuergerät 10 zylinderspezifische Laufruhewerte und zylinderspezifische Momentenbeitragswerte ermittelt.
Der Verbrennungsmotor 5 weist ferner eine Abgasleitung 8 auf, welche mit jedem der Zylinder 1, 2, 3, 4 zur Aufnahme und Ableitung eines Verbrennungsabgases verbunden ist. Die Abgasleitung 8 weist eine Breitband-Lambdasonde 9 auf, welche über eine weitere Signalleitung 22 mit dem Motorsteuergerät 10 verbunden ist. Mittels der Breitband-Lambdasonde 9 kann sowohl ein über die Zylinder 1, 2, 3, 4 gemittelter Lambdawert des Verbrennungsabgases als auch für jeden Zylinder 1, 2, 3, 4 ein zylinderspezifischer Lambdawert ermittelt werden.

Fig. 2 zeigt ein Diagramm zur Beschreibung einer Abhängigkeit einer Momentengröße M eines Zylinders 1, 2, 3, 4 von einem Lambdawert λ eines Zylinders 1, 2, 3, 4. Eine Verlaufskurve 33 beschreibt die Abhängigkeit der Momentengröße M des exemplarisch gewählten Zylinders 1 vom Lambdawert λ des Zylinders 1 bei einer konstanten Luftzufuhr und einer Veränderung des Lambdawertes über eine Veränderung der Kraftstoffmenge. Die Verlaufskurve 33 hat die Form einer nach unten offenen Parabel, deren Maximum bei einem Lambdawert λ von circa 0.92 liegt. Die Momentengröße M des Zylinders 1 ändert sich im Bereich von Lambdawerten λ zwischen circa 0,75 und 1,05 kaum und bei Lambdawerten λ, die größer als 1,1 oder kleiner als 0,7 sind, immer stärker.

Weiterhin beschreibt die Fig. 2, wie sich ein Kraftstoffpfadfehler auf die Momentenbeiträge M und auf die Lambdawerte λ des Zylinders 1 auswirkt. Solange kein Gemischfehler, das heißt weder ein Kraftstoffpfad- noch ein Luftpfadfehler, in einem der Zylinder 1, 2, 3, 4 vorliegt, besitzen alle Zylinder 1, 2, 3, 4 im Wesentlichen den gleichen Lambdawert λ, unter bestimmten Betriebsbedingungen zum Beispiel den Lambdawert λ von 1. Außerdem liefern in diesem fehlerfreien Fall alle Zylinder 1, 2, 3, 4 bei gleichen Betriebsbedingungen die gleiche Momentengröße M. Momentengröße M und Lambdawert λ im fehlerfreien Fall unter den bestimmten Betriebsbedingungen werden im Diagramm durch den ausgefüllten Kreis 31 wiedergegeben. Der leere Kreis 30 repräsentiert den Lambdawert λ1 K und die Momentengröße M1K des Zylinders 1 für den Fall eines Fehlers in dem Kraftstoffpfad des Zylinders 1, wobei bei jeder Einspritzung eine Übermenge an Kraftstoff eingespritzt wird. Ausgehend von den Koordinaten des ausgefüllten Kreises 31 verschieben sich, unter ansonsten gleichen Betriebsbedingungen, die Koordinaten des leeren Kreises 30 entlang der Verlaufskurve 33 nach links, das heißt in Richtung des niedrigeren Lambdawertes λ1 K beziehungsweise in Richtung eines fetteren Gemisches des Zylinders 1. Gemäß den oben beschriebenen Gesetzmäßigkeiten der Verlaufskurve 33 ändert sich dabei die Momentengröße M nur unwesentlich in Richtung der Momentengröße M1K. Aufgrund einer Lambdaregelung welche nach Messung des gemittelten Lambdawertes an der Lambdasonde 9 nach wie vor einen gemittelten Lambdawert von 1 einstellt, werden zum Ausgleich des Kraftstoffpfadfehlers des Zylinders 1 alle Zylinder 1, 2, 3, 4 leicht abgemagert indem die Einspritzzeiten aller Einspritzventile verkürzt werden. Dies führt dazu, dass schließlich der Zylinder 1 einen Lambdawert λ1 K und eine Momentengröße M1K aufweist. Die Zylinder 2, 3, 4 weisen dann jeweils einen Lambdawert λrefK und eine Momentengröße MrefK auf, was durch das leere Dreieck 32 dargestellt ist.

Fig. 3 zeigt ein Diagramm mit der Auftragung der gleichen Parameter wie in Fig. 2, allerdings für den Fall eines Luftpfadfehlers des Zylinders 1. Die fehlerfreie Ausgangssituation ist wieder durch den ausgefüllten Kreis 31 dargestellt. Es erfolgt nun eine durch einen Minderluftfehler verursachte Anfettung des Zylinders 1. Anders als bei der Anfettung durch einen Überschuss an Kraftstoff erfolgt bei der Anfettung durch einen Unterschuss an Luft eine deutlichen Reduzierung der Momentengröße M des Zylinders 1. Momentengröße M und Lambdawert λ des Zylinders 1 bewegen sich im Diagramm der Fig. 3 hin zu einem leeren Kreis 36, d. h. in Richtung einer Momentengröße M1 L und eines Lambdawertes I L. Über die oben beschriebene Lambdaregelung werden, zur Erreichung eines mittleren Lambdawertes λ von 1, die Zylinder 1, 2, 3, 4 über eine Verkürzung von deren Einspritzzeit abgemagert. Momentenbeiträge M und Lambdawerte λ der Zylinder 2, 3, 4 bewegen sich, da nur deren Kraftstoffmenge geändert wird, entlang der Verlaufskurve 33 hin zu dem leeren Dreieck 34.

In beiden Fehlerfällen, nämlich dem Kraftstoffpfadfehler, gezeigt in Fig. 2, und dem Luftpfadfehler, gezeigt in Fig. 3, resultiert
- ein einem Lambdasollwert entsprechender mittlerer Lambdawert λ, gemittelt über alle Zylinder 1, 2, 3, 4,
- jeweils von dem Lambdasollwert verschiedene zylinderspezifische Lambdawerte in allen Zylindern 1, 2, 3, 4, woraus sich eine Verschlechterung der Abgaswerte des Verbrennungsmotors 5 ergibt,
- eine unterschiedliche Momentengröße M1 des Zylinders 1 im Vergleich zu den Momentenbeiträgen Mref der Zylinder 2, 3, 4, woraus sich eine Verschlechterung der Laufruhe des Verbrennungsmotors 5 ergibt.

Die Fig. 2 und 3 zeigen die beiden Fälle (Kraftstoffpfadfehler bzw. Luftpfadfehler) für eine fehlerhafte Fettverschiebung des Kraftstoff-Luftgemisches in einem einzelnen Zylinder und deren Folgen.
Bei einem nicht dargestellten Fall eines Kraftstoffpfadfehlers mit einem Kraftstoffunterschuss im Zylinder 1 verschieben sich die Punkte für die Momentenbeiträge M und die Lambdawerte λ der Zylinder 1, 2, 3, 4 aus den oben genannten Gründen auf der Verlaufskurve 33, allerdings, verglichen mit der Fig. 2, jeweils in entgegengesetzter Richtung.
Bei einem nicht dargestellten Fall eines Luftpfadfehlers mit einem Luftüberschuss im Zylinder 1 ergeben sich die Punkte für die Momentenbeiträge M und die Lambdawerte λ der Zylinder 1, 2, 3,4 im Prinzip dadurch, dass man die Punkte 36 und 34 der Fig. 3 an dem Punkt 31 punktspiegelt.

Die in den Fig. 2 und 3 gezeigten unterschiedlichen Auswirkungen eines Kraftstoffpfadfehlers und eines Luftpfadfehlers auf die Momentenbeiträge M und die Lambdawerte λ der Zylinder 1 bis 4 können erfindungsgemäß zur Unterscheidung eines Luftpfadfehlers und eines Kraftstoffpfadfehlers ausgewertet werden.

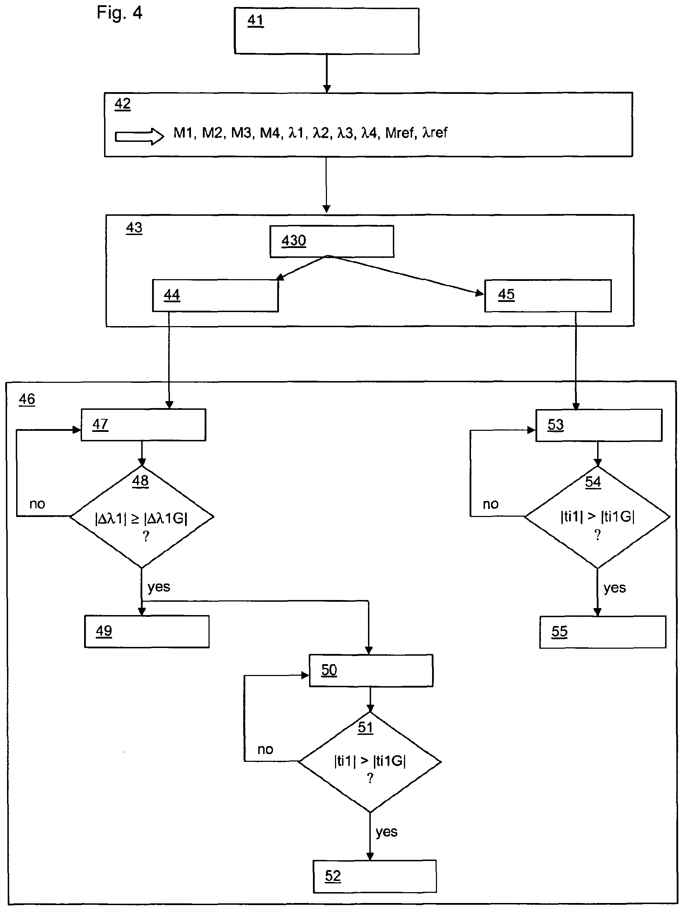

Fig. 4 zeigt ein Ablaufdiagramm zur Darstellung des erfindungsgemäßen Verfahrens.
Dabei wird in einem Start-Schritt 41 geprüft, ob Betriebsbedingungen des Verbrennungsmotors 5 vorliegen, welche eine Durchführung des Verfahrens, insbesondere eine Durchführung von vergleichbaren Messungen, erlauben.

Bei Vorliegen der entsprechenden Betriebsbedingungen erfolgt ein Ermittlungsschritt 42 zur Ermittlung der Momentengrößen M1, M2, M3, M4 und der Lambdagrößen λ1, λ2, λ3, λ4 der Zylinder 1 bis 4. Außederm werden in dem Ermittlungsschritt 42 der Momentenreferenzwert Mref bzw. der Lambdareferenzwert λref ermittelt. Besonders einfach und daher vorteilhaft ist es, als Referenzwerte Mref bzw. λref jeweils den Mittelwert der Momentengrößen bzw. der Lambdagrößen derjenigen Zylinder zu verwenden, deren jeweilige Werte besonders eng beieinander liegen.

Anschließend erfolgt ein Bestimmungsschritt 43. Bei dem Bestimmungsschritt 43 wird vorteilhafter Weise jeder zylinderspezifische Wert der Momentengrößen M1, M2, M3, M4 mit dem Referenzwert Mref und der Lambdagrößen λ1, A2, λ3, λ4 mit dem Referenzwert λref verglichen. Im Falle von dem Verbrennungsmotor 5 mit dem fehlerhaften Zylinder 1 werden die Werte der Lambdagrößen A2, λ3, λ4 der übrigen Zylinder nahe beieinander liegen und die Werte der Momentengrößen M2, M3, M4 der übrigen Zylinder nahe beieinander liegen. Die relative Verschiebung der Werte der Größen M1, M2, M3, M4 gegenüber Mref und der Werte der Größen λ1, A2, λ3, λ4 gegenüber λref, in Abhängigkeit von einem Ausmaß eines Luftpfad- oder Kraftstoffpfadfehelrs, kann für die nachfolgend aufgeführten Fehlerfälle experimentell am jeweiligen konkreten Verbrennungsmotor 5 ermittelt werden. Es ergibt sich im Wesentlichen das folgende Bild:
- Fehlerfall 1: es liegt ein niedrigerer Wert der Lambdagröße λ1 (fetter) sowie ein niedrigerer Wert der Momentengröße M1 des fehlerhaften Zylinders 1 im Vergleich zu dem Lambdareferenzwert λref und dem Momentenreferenzwert Mref vor; dem Fehlerfall 1 wird die Ursache "Minderluftfehler des Zylinders 1" zugeordnet, da das gleichzeitige Vorliegen von einem Kraftstoffüberschuss und einem Verlust an Momentenbeitrag auf eine Minderdosierung an Luft schließen lässt;
- Fehlerfall 2: es liegt ein höherer Wert der Lambdagröße λ1 (magerer) sowie ein höherer Wert der Momentengröße M1 des fehlerhaften Zylinders 1 im Vergleich zu dem Lambdareferenzwert λref und dem Momentenreferenzwert Mref vor; dem Fehlerfall 2 wird die Ursache "Mehrluftfehler des Zylinders 1" zugeordnet, da das gleichzeitige Vorliegen von einem Luftüberschuss und einem Zugewinn an Momentenbeitrag auf eine Überdosierung an Luft schließen lässt;

- Fehlerfall 3: es liegt ein höherer Wert der Lambdagröße λ1 (magerer) sowie ein niedrigerer oder näherungsweise gleicher Wert der Momentengröße M1 des fehlerhaften Zylinders 1 im Vergleich zu dem Lambdareferenzwert λref und dem Momentenreferenzwert Mref vor; dem Fehlerfall 3 wird die Ursache "Minderkraftstofffehler des Zylinders 1" zugeordnet, da das gleichzeitige Vorliegen von einem Luftüberschuss und einem Verlust an Momentenbeitrag auf eine Minderdosierung an Kraftstoff schließen lässt;
- Fehlerfall 4: es liegt ein niedrigerer Wert der Lambdagröße λ1 (fetter) sowie ein näherungsweise gleicher oder etwas höherer Wert der Momentengröße M1 des fehlerhaften Zylinders 1 im Vergleich zu dem Lambdareferenzwert λref und dem Momentenreferenzwert Mref vor; dem Fehlerfall 4 wird die Ursache "Mehrkraftstofffehler des Zylinders 1" zugeordnet, da das gleichzeitige Vorliegen von einem Kraftstoffüberschuss und von einem nicht verminderten Momentenbeitrag auf eine Überdosierung an Kraftstoff schließen lässt.

Die Momentengröße bedeutet dabei einen Momentenbeitrag des Zylinders oder eine dem Momentenbeitrag des Zylinders proportionale Größe wie zum Beispiel eine auf den Zylinder bezogene Segmentzeit an einer Kurbelwelle des Verbrennungsmotors. Die Lambdagröße bedeutet dabei einen Lambdawert des Zylinders, welcher zum Beispiel aus einer zylinderspezifischen Messung eines Sauerstoffgehaltes mittels einer Breitband-Lambdasonde ermittelt oder mittels einem durch die DE 102007043734 A1 beschriebenen Verfahren abgeschätzt werden kann. Die Momentengröße und die Lambdagröße werden unter definierten Betriebsbedingungen des Verbrennungsmotors ermittelt.

Die Momenten-Referenzgröße Mref kann dabei zum Beispiel einen Momentenbeitrag des Zylinders 1 in einem Neuzustand, beziehungsweise in einem nicht defekten Zustand, unter definierten Betriebsbedingungen des Verbrennungsmotors 5 bedeuten. Die Momenten-Referenzgröße Mref kann alternativ einen durchschnittlichen Momentenbeitrag aller Zylinder 1, 2, 3, 4 des Verbrennungsmotors 5 oder einen durchschnittlichen Momentenbeitrag einer Auswahl an Zylindern des Verbrennungsmotors 5 bedeuten.

Die Lambda-Referenzgröße λref kann dabei zum Beispiel einen Lambdawert des Zylinders 1 in einem Neuzustand beziehungsweise in einem nicht defekten Zustand, unter definierten Betriebsbedingungen des Verbrennungsmotors 5 bedeuten. Die Lambda-Referenzgröße λref kann alternativ einen durchschnittlichen Lambdawert aller Zylinder 1, 2, 3, 4 des Verbrennungsmotors 5 oder einen durchschnittlichen Lambdawert einer Auswahl an Zylindern des Verbrennungsmotors 5 bedeuten.

Der Bestimmungsschritt 43 weist eine Anzeige 430 auf, durch welche entsprechend den oben genannten Kriterien zumindest ein Luftpfadfehler 44 oder ein Kraftstoffpfadfehler 45 des Zylinders 1 des Verbrennungsmotors 5 angezeigt wird. Idealerweise werden die im Bestimmungsschritt 43 gewonnenen Festlegungen zu einer Anzeige einer differenzierten Art des Luft-Kraftstoff-Gemisch-Fehlers verarbeitet, wobei die Anzeige jeweils die Ursache der oben genannten Fehlerfälle angibt, soweit es eine Bestimmungsgenauigkeit des jeweiligen konkreten Systems erlaubt. Mit der Anzeige ist eine interne Statusinformation gemeint, welche in einem Steuerungssystem des Verbrennungsmotors vorliegt und in weiteren Funktionen verarbeitbar ist.

Anschließend erfolgt ein Korrektur- und Diagnoseschritt 46. Wenn das Ergebnis des Bestimmungsschrittes 43 ein Luftpfadfehler 44 ist, so startet in dem Korrektur- und Diagnoseschritt 46 eine erste Korrekturfunktion 47, nämlich eine Korrektur einer Einspritzzeit ti1 des Zylinders 1 sowie gegebenenfalls der Einspritzzeiten der übrigen Zylinder 2, 3, 4 zu einer Momentengleichstellung in Abhängigkeit von einem Maß des Luftpfadfehlers. Als ein Maß für den Luftpfadfehler wird z. B. eine Abweichung eines Ist-Lambdawertes des Zylinders 1 von einem Soll-Lambdawert oder ein Laufunruhewert verwendet. Vergrößert sich das Maß des Luftpfadfehlers 44, so folgt die Korrektur der Einspritzzeit ti1 bis zu einem Grenz-Lambdawert Δλ1G des Zylinders 1, was durch einen Vergleichsschritt 48 sichergestellt wird. Ist der Grenz-Lambdawert Δλ1G erreicht, so wird ein komfortrelevanter Luftpfadfehler 49 in dem Fehlerspeicher des Motorsteuergerätes 10 eingetragen, die erste Korrekturfunktion 47 beendet, und es wird eine zweite Korrekturfunktion 50 gestartet, nämlich eine Korrektur der Einspritzzeit ti1 des Zylinders 1 sowie gegebenenfalls der Einspritzzeiten der übrigen Zylinder 2, 3, 4 zu einer Lambdagleichstellung. Die zweite Korrekturfunktion 50 ist begleitet von einer zweiten Vergleichsfunktion 51, bei welcher ein Erreichen einer Grenzeinspritzzeit ti1 G überwacht wird. Ist die Grenzeinspritzzeit ti1G erreicht, so kann ein sich weiter erhöhender Luftpfadfehler 44 des Zylinders 1 nicht weiter korrigiert werden, so dass sich ab dem Erreichen der Grenzeinspritzzeit ti1G die Abgasqualität des Zylinders über einen Abgasgrenzwert hinaus bzw. über den Grenz-Lambdawert Δλ1G hinaus verschlechtert. Bei Erreichen der Grenzeinspritzzeit ti1G wird ein abgasrelevanter Luftpfadfehler 52 in dem Motorsteuergerät 10 des Verbrennungsmotors 5 abgespeichert.

Wenn das Ergebnis des Bestimmungsschrittes 43 ein Kraftstoffpfadfehler 45 ist, so startet in dem Korrektur- und Diagnoseschritt 46 eine dritte Korrekturfunktion 53, nämlich eine Einspritzmengen-Korrektur zu einer Lambdagleichstellung.

Die dritte Korrekturfunktion 53 wird begleitet von einer dritten Vergleichsfunktion 54, bei welcher die aktuell eingestellte Einspritzzeit ti1 des Zylinders 1 mit der Grenzeinspritzzeit ti1G verglichen wird. Überschreitet die Einspritzzeit ti des ersten Zylinders 1 betragsmäßig die Grenzeinspritzzeit ti1G, so wird die dritte Korrekturfunktion 50 beendet, es erfolgt ein Eintrag eines abgasrelevanten Kraftstoffpfadfehlers 55.

Die Grenzwerte Grenz-Lambdawert Δλ1G und Grenzeinspritzzeit tiG sind vorteilhafterweise als parameterabhängige Werte in Form von Kennfeldern in dem Motorsteuergerät 10 des Verbrennungsmotors 5 hinterlegt.

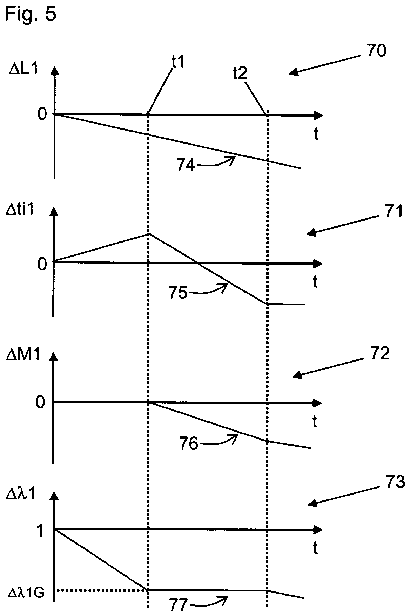

Fig. 5 zeigt Diagramme 70, 71, 72, 73 zur Beschreibung von Verläufen von ausgewählten Parametern wie sie sich bei der Ausführung des erfindungsgemäßen Verfahrens ergeben.

Diagramm 70 zeigt einen Verlauf einer Abweichung ΔL1 einer Ist-Luftmenge von einer Soll-Luftmenge des Zylinders 1 über einer Zeit t bei Vorliegen eines Minderluftfehlers, dessen Ausmaß sich im Verlauf der Zeit t vergrößert. Die entsprechende Verlaufskurve 74 weist eine negative Steigung auf. Bis zu einem Zeitpunkt t1 liegt ein geringer Luftpfadfehler vor, dessen Auswirkungen auf das Abgas des Verbrennungsmotors gering ist. Ab einem Zeitpunkt t2 liegt ein Luftpfadfehler solchen Ausmaßes vor, dass durch das erfindungsgemäße Korrekturverfahren eine geforderte Abgasqualität nicht mehr eingehalten werden kann.

Diagramm 71 zeigt einen Verlauf einer Einspritzzeitänderung Ati1 über der Zeit t. Die Einspritzzeitänderung Ati1 wird durch das erfindungsgemäße Verfahren in einem Maße generiert, dass der Momentenbeitrag des Zylinders 1 dem der übrigen Zylinder angeglichen wird. Bis zum Zeitpunkt t1 besitzt eine Verlaufskurve 75 der Einspritzzeitänderung Ati1 des Zylinders 1 aufgrund des erfindungsgemäßen Verfahrens eine positive Steigung weil ein Momentenverlust durch den Miderluftfehler durch eine Erhöhung der Einspritzmenge des Zylinders 1 ausgeglichen wird.

Diagramm 72 zeigt einen Verlauf einer Abweichung ΔM1 der Momentengröße des Zylinders 1. Bis zum Zeitpunkt t1 besitzt eine Verlaufskurve 76 der Änderung ΔM1 des Momentenbeitrages einen Wert 0, da aufgrund des erfindungsgemäßen Verfahrens bis zum Zeitpunkt t1 der Momentenbeitrag des Zylinders 1 nicht von den Momentenbeiträgen der anderen Zylinder 2, 3, 4 abweicht.

Diagramm 73 zeigt einen Verlauf einer Abweichung Δλ1 der Lambdagröße des Zylinders 1. Aufgrund eines im Diagramm 70 beschriebenen Luftmangels im Zylinder 1 und einer im Diagramm 71 beschriebenen Einspritzzeiterhöhung im Zylinder 1 resultiert eine starke Anfettung des Kraftstoff-Luftgemisches in Zylinder 1, so dass eine Verlaufskurve 77 der Abweichung Δλ1 der Lambdagröße des Zylinders 1 bis zum Zeitpunkt t1 eine negative Steigung aufweist.

Bei dem Zeitpunkt t1 ist ein Grenzlambdawert Δλ1G des Zylinders 1 erreicht. Aufgrund des erfindungsgemäßen Verfahrens wird nach dem Zeitpunkt t1 aufgrund der aus dem Diagramm 74 zu entnehmenden weiter abnehmenden Luftmenge in dem Zylinder 1 die zweite Korrekturfunktion 50 gestartet.

In der Folge nimmt gemäß Diagramm 71 eine Einspritzzeit ab bzw. die Verlaufskurve 75 der Einspritzzeitänderung Ati1 des Zylinders 1 erhält ab dem Zeitpunkt t1 eine negative Steigung. Außerdem nimmt der Momentenbeitrag des Zylinders 1 ab, was sich im Diagramm 72 an einer negativen Steigung der Verlaufskurve 76 der Änderung ΔM1 des Momentenbeitrages des Zylinders 1 ab dem Zeitpunkt t1 zeigt. Die Verlaufskurve 77 der Abweichung Δλ1 der Lambdagröße des Zylinders 1 hat dagegen ab dem Zeitpunkt t1 eine Steigung von 0, da sich erfindungsgemäß ab dem Zeitpunkt t1 die Abgasqualität des Zylinders 1 nicht mehr verschlechtert.

Zum Zeitpunkt t2 ist eine Grenze der Einspritzzeitänderung Ati1 erreicht, so dass auch bei weiter sich verringernder Luftmenge im Zylinder 1 keine weitere Korrektur mehr möglich ist. Die Verlaufskurve 75 der Einspritzzeitänderung Ati1 des Zylinders 1 besitzt daher ab dem Zeitpunkt t2 eine Steigung von 0, die Verlaufskurve 76 der Änderung ΔM1 des Momentenbeitrages des Zylinders 1 fällt nach dem Zeitpunkt t2 weiter ab, jedoch mit einem geringeren Betrag der negativen Steigung. Die Verlaufskurve 77 der Abweichung Δλ1 des Lambdawertes des Zylinders 1 besitzt nach dem Zeitpunkt t2 eine negative Steigung.

Ab dem Zeitpunkt t1 wird die Laufunruhe des Verbrennungsmotors spürbar für einen Fahrer des Kraftfahrzeuges, ab dem Zeitpunkt t2 wird ein Abgasgrenzwert des Verbrennungsmotors überschritten. Zum Zeitpunkt t1 wird ein komfortrelevanter Luftpfadfehler gesetzt, zum Zeitpunkt t2 wird ein abgasrelevanter Luftpfadfehler gesetzt.

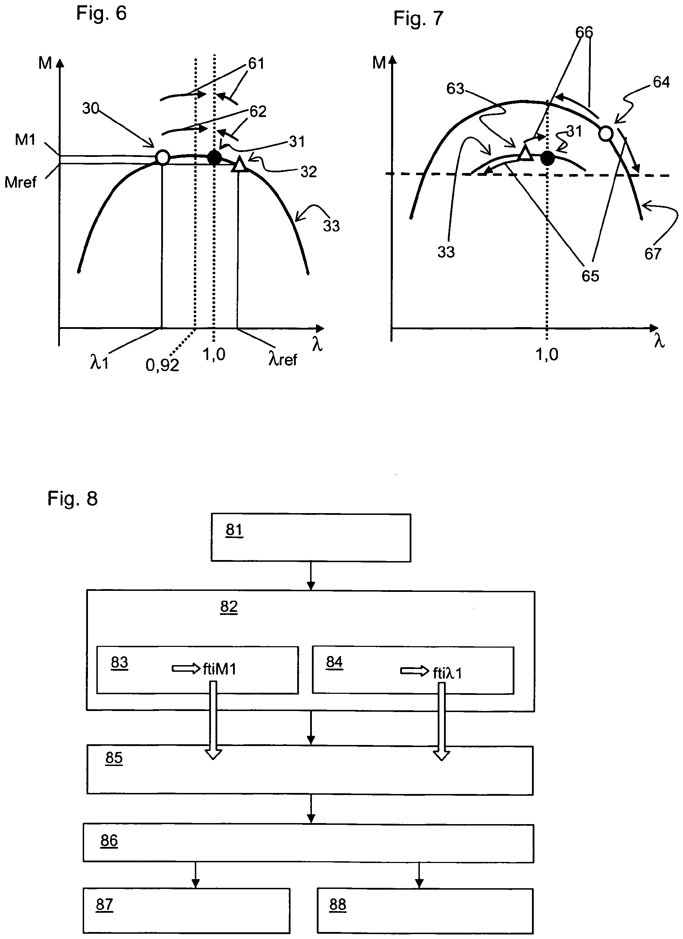

Die Figuren 6, 7 und 8 beschreiben Zusammenhänge für eine alternative Ausführungsform des erfindungsgemäßen Verfahrens. Bei der alternativen Ausführungsform wird die Tatsache genutzt, dass im Falle eines Luftpfadfehlers eines Zylinders 1, durch eine Korrektur der Kraftstoffmenge allein entweder eine Gleichstellung der Momentenbeiträge M1, M2, M3, M4 aller Zylinder 1 bis 4 erzielt werden kann oder eine Gleichstellung der Lambdabeiträge λ1, λ2, λ3, λ4 aller Zylinder 1 bis 4. Es ist im Falle eines Luftpfadfehlers nicht möglich durch eine Korrektur der Kraftstoffmenge allein sowohl die Momentenbeiträge M1, M2, M3, M4 als auch die Lambdawerte λ1, λ2, λ3, λ4 gleichzustellen.

Fig. 6 zeigt das gleiche Diagramm wie die Fig. 2, das heißt, es ist ein Kraftstoffpfadfehler des Zylinders 1 gezeigt. Dabei beschreiben die Pfeile 61 die Bewegung der Diagrammpunkte im Zuge einer Einspritzzeit-Änderung zur Lambdagleichstellung und die Pfeile 62 die Bewegung der Diagrammpunkte im Zuge einer Einspritzzeit-Änderung zur Momentengleichstellung. Lambdagleichstellung und Momentengleichstellung haben, sofern als Korrekturgröße die Einspritzzeit der Zylinder 1 bis 4 verwendet wird, das gleiche Ergebnis. Das heißt: sowohl bei der Lambdagleichstellung (Pfeile 61) als auch bei der Momentengleichstellung (Pfeile 62) resultiert bei dem Zylinder 1 (leerer Kreis 30) eine Einspritzzeit-Erniedrigung zur Abmagerung des Gemisches und bei den Zylindern 2 bis 4 (leeres Dreieck 32) eine Einspritzzeit-Erhöhung zur Anfettung des Gemisches. Nach der Durchführung der Korrektur haben alle Zylinder 1 bis 4 im Wesentlichen wieder die durch den gefüllten Kreis 31 repräsentierten Momentenbeitrags- und Lambdawerte.

Fig. 7 zeigt ein Diagramm gleicher Art, jedoch ist ein Luftpfadfehler bei dem Zylinder 1 dargestellt. Der leere Kreis 64 gibt die Momentengröße M und den Lambdawert λ des fehlerhaften Zylinders 1 an. Verglichen mit dem fehlerfreien Zustand, charakterisiert durch den geschlossenen Kreis 31, weist der Zylinder 1 aufgrund einer erhöhten Luftmasse in dem Zylinder 1 einen höheren Lambdawert λ und eine erhöhte Momentengröße M auf. Die übrigen Zylinder 2 bis 4, charakterisiert durch das leere Dreieck 63, weisen aufgrund des oben beschriebenen Effektes der Lambdaregelung ein leicht fettes Gemisch auf. Die Verlaufskurven 33 und 67 zeigen die Abhängigkeit der Momentengröße von dem Lambdawert λ bei konstanter Luftmasse. Die Verlaufskurve 67 des Zylinders 1 liegt höher als die Verlaufskurve 33 der Zylinder 2 bis 4, da der Zylinder 1 durch seine erhöhte Luftmasse einen höheren Momentenbeitrag M aufweist. Eine Änderung der Momentengröße und des Lambdawertes λ des Zylinders 1, d.h. eine Verschiebung des leeren Kreises 64, durch eine Korrektur der Einspritzzeit des Zylinders 1, kann nur entlang der Verlaufskurve 67 erfolgen. Ebenso kann eine Änderung der Momentengröße M und des Lambdawertes λ der Zylinder 2 bis 4, d.h. eine Verschiebung des leeren Dreiecks 63, durch eine Korrektur der Einspritzzeit der Zylinder 2 bis 4, nur entlang der Verlaufskurve 33 erfolgen. Daraus folgt, dass durch eine Änderung der Einspritzzeiten der Zylinder 1 und 2 bis 4 entweder eine Momentengleichstellung oder eine Lambdagleichstellung erzielt werden kann, jedoch nicht sowohl eine Momentengleichstellung als auch eine Lambdagleichstellung.

Eine Lambdagleichstellung, angedeutet durch die Pfeile 66, wird durch eine Anfettung des Zylinders 1, d.h. durch eine Erhöhung der Einspritzzeit des Zylinders 1 und gleichzeitig eine Abmagerung der Zylinder 2 bis 4, d.h. durch eine Erniedrigung der Einspritzzeit der Zylinder 2 bis 4 erreicht.

Eine Momentengleichstellung, angedeutet durch die Pfeile 65, wird durch eine Abmagerung des Zylinders 1, d.h. durch eine Erniedrigung der Einspritzzeit des Zylinders 1 und gleichzeitig eine Anfettung der Zylinder 2 bis 4, d.h. durch eine Erhöhung der Einspritzzeit der Zylinder 2 bis 4 erreicht.

Die mit den Figuren 6 und 7 beschriebenen Sachverhalte lassen sich bei Vorliegen eines Luft-Kraftstoff-Gemisch-Fehlers erfindungsgemäß zu dem alternativen Verfahren zur Bestimmung der Art des Luft-Kraftstoff-Gemisch-Fehlers verarbeiten.
Das alternative Verfahren wird in Fig. 8 beschrieben.
Bei dem erfindungsgemäßen alternativen Verfahren wird ein Ermittlungsschritt 82 eingeleitet nach dem in einem Start-Schritt 81 unter anderem geprüft wurde, ob geeignete Betriebsbedingungen des Verbrennungsmotors 5 für die Durchführung des Ermittlungsschrittes 82 bestehen. Der Ermittlungsschritt 82 weist einen ersten Unterschritt 83 und einen zweiten Unterschritt 84 auf. Der erste Unterschritt 83 weist eine Bestimmung einer ersten Einspritzzeitkorrektur ftiM1 für den Zylinder 1 auf, welche Bestimmung auf eine an sich bekannte Weise nach einem Momentengleichstellungsverfahren erfolgt. Der zweite Unterschritt 84 weist eine Bestimmung einer zweiten Einspritzzeitkorrektur ftiλ1 für den Zylinder 1 auf, welche Bestimmung auf eine an sich bekannte Weise nach einem Lambdagleichstellungsverfahren erfolgt.

In einem Vergleichsschritt 85 werden die erste Einspritzzeitkorrektur ftiM1 und die zweite Einspritzzeitkorrektur ftiλ1 auf nachfolgend beschriebene Weise verglichen und weiterverarbeitet:
- wenn die erste Einspritzzeitkorrektur ftiM1 und die zweite Einspritzzeitkorrektur ftiλ1 gleich sind, so wird ein Vorliegen eines Kraftstofffehlers festgelegt,
- wenn die erste Einspritzzeitkorrektur ftiM 1 größer als die zweite Einspritzzeitkorrektur ftiλ1 ist, so wird ein Vorliegen eines Minderluftfehlers festgelegt,
- wenn die erste Einspritzzeitkorrektur ftiM1 kleiner als die zweite Einspritzzeitkorrektur ftiλ1 ist, so wird ein Vorliegen eines Mehrluftfehlers festgelegt.
Festgelegt bedeutet, dass eine systeminterne Statusanzeige erfolgt.

In einem Maßnahmenschritt 86 werden die im Vergleichsschritt 85 gewonnenen Festlegungen einerseits zu einer Ausgabe der Art des Luft-Kraftstoff-Gemischfehlers 87 verarbeitet, wobei die Fehlerausgabe jeweils die Ursache der oben genannten Fehlerfälle angibt, soweit es eine Bestimmungsgenauigkeit des jeweiligen konkreten Systems erlaubt. Andererseits erfolgt durch den Maßnahmenschritt 86 die Einleitung eines Korrekturschrittes 88, bei welchem die Einspritzzeit und/oder die Luftmasse und/oder der Zündwinkel der Zylinder 1 bis 4 so korrigiert wird, dass im Wesentlichen eine Gleichstellung der Lambdawerte und/oder der Momentenbeitragswerte der Zylinder 1 bis 4 resultiert.

## Patentansprüche

1. Verfahren zur Korrektur einer Einspritzmenge im Falle eines Luftpfadfehlers (44) eines Zylinders (1) eines Verbrennungsmotors (5) eines Kraftfahrzeuges, **dadurch gekennzeichnet, dass**
eine Einspritzmenge des Zylinders (1) korrigiert wird, wobei
- eine Momentengröße (M1) des Zylinders (1) ermittelt wird,
- eine Lambdagröße (λ1) des Zylinders (1) ermittelt wird,
- eine Momenten-Referenzgröße (Mref) sowie eine Lambda-Referenzgröße (λref) ermittelt werden, und
- in Abhängigkeit von einem Vergleich der Momentengröße (M1) mit der Momenten-Referenzgröße (Mref) und in Abhängigkeit von einem Vergleich der Lambdagröße (λ1) mit der Lambda-Referenzgröße (λref) die Art eines Luft-Kraftstoff-Gemisch-Fehlers gleich dem Kraftstoffpfadfehler (45) des Zylinders (1) oder gleich dem Luftpfadfehler (44) des Zylinders (1) gesetzt wird, wobei mit dem Luftpfadfehler eine fehlerhafte Abweichung einer Ist-Luftmengenzufuhr von einer Soll-Luftmengenzufuhr zu dem Zylinder (1) gemeint ist, und wobei es im Falle eines Luftpfadfehlers nicht möglich ist, durch eine Korrektur der Kraftstoffmenge alleine sowohl die Momentengrößen (M1, M2, M3, M4) als auch die Lambdagrößen (λ1, λ2, λ3, λ4) gleichzustellen,
**dadurch gekennzeichnet, dass**
- bei einem Luftpfadfehler (44) mit einer geringen Abweichung (Δλ1) der Lambdagröße (λ1) des Zylinders (1) von der Lambda-Referenzgröße (λref) bis zu einer Grenzabweichung (Δλ1G) der Lambdagröße (λ1) von der Lambda-Referenzgröße (λref) die Einspritzmenge des Zylinders (1) in Abhängigkeit von dem Luftpfadfehler (44) zu einer Annäherung und/oder einer Gleichstellung eines Momentenbeitrages des Zylinders (1) in Bezug auf Momentenbeiträge von anderen Zylindern (2, 3, 4) des Verbrennungsmotors (5) unter Erhöhung der Abweichung (Δλ1) der Lambdagröße (λ1) des Zylinders (1) von der Lambda-Referenzgröße (λref) in Bezug auf Lambdagrößen von anderen Zylindern (2, 3, 4) des Verbrennungsmotors (5) verändert wird,
- bei einem Luftpfadfehler (44) mit der Grenzabweichung (Δλ1G) der Lambdagröße (λ1) des Zylinders (1) von der Lambda-Referenzgröße (λref) die Einspritzmenge des Zylinders (1) in Abhängigkeit von dem Luftpfadfehler (44) zu einer Konstanthaltung der Lambdagröße (λ1) verändert wird.

2. Verfahren nach Anspruch 1,
**dadurch gekennzeichnet, dass**
- bei Vorliegen des Luftpfadfehlers (44) und der Grenzabweichung (Δλ1G) der Lambdagröße (λ1) ein komfortrelevanter Fehler (49) des Luftpfades (12) des Zylinders (1) gesetzt wird,
- bei Vorliegen des Luftpfadfehlers (44) und einer Überschreitung der Grenzabweichung (Δλ1G) der Lambdagröße (λ1) ein abgasrelevanter Fehler (52) des Luftpfades (12) des Zylinders (1) gesetzt wird.

3. Verfahren nach Anspruch 1 oder 2,
**dadurch gekennzeichnet, dass**
die Momentengröße (M1) des Zylinders (1) von einem Laufruhewert des Zylinders (1) abhängt.

4. Verfahren nach einem der Ansprüche 1 bis 3,
**dadurch gekennzeichnet, dass**
die Momentengröße (M1) des Zylinders (1) von einer auf den Zylinder (1) bezogenen Segmentzeit an einer Kurbelwelle (6) des Verbrennungsmotors (5) abhängt.

5. Verfahren nach einem der Ansprüche 1 bis 4,
**dadurch gekennzeichnet, dass**
die Momenten-Referenzgröße (Mref) des Zylinders (1) von den Momentengrößen der anderen Zylinder (2, 3, 4) des Verbrennungsmotors (5) abhängt und/oder die Lambda-Referenzgröße (λref) von den Lambdagrößen der anderen Zylinder (2, 3, 4) des Verbrennungsmotors (5) abhängt.

6. Verfahren nach einem der Ansprüche 1 bis 5,
**dadurch gekennzeichnet, dass**
- bei einer Lambdagröße (λ1) des Zylinders (1), die im Vergleich zu der Lambda-Referenzgröße (λref) des Zylinders (1) in Richtung fett verschoben ist, sowie einer Momentengröße (M1) des Zylinders (1), die im Vergleich zu der Momenten-Referenzgröße (Mref) des Zylinders (1) in Richtung niedrigerer Momentenbeitrag verschoben ist, ein Luftfehler, insbesondere ein Minderluftfehler, gesetzt wird,
- bei einer Lambdagröße (λ1) des Zylinders (1), die im Vergleich zu der Lambda-Referenzgröße (λref) des Zylinders (1) in Richtung mager verschoben ist sowie einer Momentengröße (M1) des Zylinders (1), die im Vergleich zu der Momenten-Referenzgröße (Mref) des Zylinders (1) in Richtung höherer Momentenbeitrag verschoben ist, ein Luftfehler, insbesondere ein Mehrluftfehler, gesetzt wird,
- bei einer Lambdagröße (λ1) des Zylinders (1), die im Vergleich zu der Lambda-Referenzgröße (λref) des Zylinders (1) in Richtung mager verschoben ist sowie einer Momentengröße (M1) des Zylinders (1), die im Vergleich zu der Momenten-Referenzgröße (Mref) des Zylinders (1) in Richtung niedrigerer Momentenbeitrag verschoben ist, ein Kraftstofffehler, insbesondere ein MinderKraftstofffehler, gesetzt wird,
- bei einer Lambdagröße (λ1) des Zylinders (1), die im Vergleich zu der Lambda-Referenzgröße (λref) des Zylinders (1) in Richtung fett verschoben ist sowie einer Momentengröße (M1) des Zylinders, die im Vergleich zu der Momenten-Referenzgröße (Mref) des Zylinders (1) im Wesentlichen gleich ist, ein Kraftstofffehler, insbesondere ein Mehr-Kraftstofffehler, gesetzt wird.

7. Verfahren nach einem der Ansprüche 1 bis 6,
**dadurch gekennzeichnet, dass**
- in Abhängigkeit von einem Vergleich der Momentengröße mit der Momenten-Referenzgröße gemäß einem Momentengleichstellungsverfahren (83) eine erste Einspritzmengen-Korrektur (ftiM1) ermittelt wird und
- in Abhängigkeit von einem Vergleich der Lambdagröße mit der Lambda-Referenzgröße gemäß einem Lambdagleichstellungsverfahren (84) eine zweite Einspritzmengen-Korrektur (ftiλ1) ermittelt wird und
- in Abhängigkeit von einem Vergleich (85) der ersten Einspritzmengen-Korrektur (ftiM1) mit der zweiten Einspritzmengen-Korrektur (ftiλ1) die Art des Luft-Kraftstoff-Gemisch-Fehlers (87) gleich einem Kraftstoffpfadfehler des Zylinders (1) oder gleich einem Luftpfadfehler des Zylinders (1) gesetzt wird, wobei
- wenn die erste Einspritzmengen-Korrektur (ftiM1) im Wesentlichen gleich der zweiten Einspritzmengen-Korrektur (ftiλ1) ist, die Art des Luft-Kraftstoff-Gemisch-Fehlers (87) gleich einem Kraftstoffpfadfehler gesetzt wird,
- wenn die erste Einspritzmengen-Korrektur (ftiM1) ungleich der zweiten Einspritzmengen-Korrektur (ftiλ1) ist, die Art des Luft-Kraftstoff-Gemisch-Fehlers (87) gleich einem Luftpfadfehler gesetzt wird.

8. Verfahren nach Anspruch 7,
**dadurch gekennzeichnet, dass**
- wenn die erste Einspritzmengen-Korrektur (ftiM1) größer als die zweite Einspritzmengen-Korrektur (ftiλ1) ist, die Art des Luft-Kraftstoff-Gemisch-Fehlers (87) gleich einem Minderluft-Fehler gesetzt wird,
- wenn die erste Einspritzmengen-Korrektur (ftiM1) kleiner als die zweite Einspritzmengen-Korrektur (ftiA1) ist, die Art des Luft-Kraftstoff-Gemisch-Fehlers (87) gleich einem Mehrluft-Fehler gesetzt wird.

## Claims

1. Method for correcting an amount of fuel injected in the case of an air pathway error (44) of a cylinder (1) of an internal combustion engine (5) of a motor vehicle,
**characterised in that**
an amount of fuel injected into the cylinder (1) is corrected, wherein
- a moment value (M1) of the cylinder (1) is determined,
- a lambda value (λ1) of the cylinder (1) is determined,
- a moment reference value (Mref) and a lambda reference value (λref) are determined, and
- depending on a comparison of the moment value (M1) to the moment reference value (Mref) and depending on a comparison of the lambda value (λ1) to the lambda reference value (λref), the type of an air/fuel mixture error is equated with the fuel pathway error (45) of the cylinder (1) or the air pathway error (44) of the cylinder (1), wherein an erroneous deviation of an actual air quantity feed from a target air quantity feed to the cylinder (1) is meant by the term "air pathway error" and wherein, in the case of an air pathway error, it is not possible to equate both the moment values (M1, M2, M3, M4) and the lambda values (λ1, λ2, λ3, λ4) solely by correcting the fuel quantity,
**characterised in that**
- at an air pathway error (44) with a minor deviation (Δλ1) of the lambda value (λ1) of the cylinder (1) from the lambda reference value (λref) up to a limit deviation (Δλ1G) of the lambda value (λ1) of the cylinder (1) from the lambda reference value (λref), the amount of fuel injected into the cylinder (1) is changed as a function of the air pathway error (44) to an approximation and/or an equation of a moment contribution of the cylinder (1) with respect to moment contributions of other cylinders (2, 3, 4) of the internal combustion engine (5) while increasing the deviation (Δλ1) of the lambda value (λ1) of the cylinder (1) from the lambda reference value (λref) with respect to lambda values of other cylinders (2, 3, 4) of the internal combustion engine (5),
- at an air pathway error (44) with the limit deviation (Δλ1G) of the lambda value (λ1) of the cylinder (1) from the lambda reference value (λref), the amount of fuel injected into the cylinder (1) is changed as a function of the air pathway error (44) for holding the lambda value (λ1) constant.

2. Method according to claim 1,
**characterised in that**
- at the existence of the air pathway error (44) and the limit deviation (Δλ1G) of the lambda value (λ1), a comfort-relevant error (49) of the air pathway (12) of the cylinder (1) is set,
- at the existence of the air pathway error (44) and if the limit deviation (Δλ1G) of the lambda value (λ1) is exceeded, an exhaust gas-relevant error (52) of the air pathway (12) of the cylinder (1) is set.

3. Method according to claim 1 or 2,
**characterised in that**
the moment value (M1) of the cylinder (1) depends on a smooth running value of the cylinder (1).

4. Method according to any of claims 1 to 3,
**characterised in that**
the moment value (M1) of the cylinder (1) depends on a segment time related to the cylinder (1) at a crankshaft (6) of the internal combustion engine (5).

5. Method according to any of claims 1 to 4,
**characterised in that**
the moment reference value (Mref) of the cylinder (1) depends on the moment values of the other cylinders (2, 3, 4) of the internal combustion engine (5) and/or **in that** the lambda reference value (λref) depends on the lambda values of the other cylinders (2, 3, 4) of the internal combustion engine (5).

6. Method according to any of claims 1 to 5,
**characterised in that**
- at a lambda value (λ1) of the cylinder (1) shifted towards rich compared to the lambda reference value (λref) of the cylinder (1) and at a moment value (M1) of the cylinder (1) shifted towards lower moment contribution compared to the moment reference value (Mref) of the cylinder (1), an air error, in particular a low air error, is set,
- at a lambda value (λ1) of the cylinder (1) shifted towards lean compared to the lambda reference value (λref) of the cylinder (1) and at a moment value (M1) of the cylinder (1) shifted towards higher moment contribution compared to the moment reference value (Mref) of the cylinder (1), an air error, in particular a high air error, is set,
- at a lambda value (λ1) of the cylinder (1) shifted towards lean compared to the lambda reference value (λref) of the cylinder (1) and at a moment value (M1) of the cylinder (1) shifted towards lower moment contribution compared to the moment reference value (Mref) of the cylinder (1), a fuel error, in particular a low fuel error, is set,
- at a lambda value (λ1) of the cylinder (1) shifted towards rich compared to the lambda reference value (λref) of the cylinder (1) and at a moment value (M1) of the cylinder which is substantially equal compared to the moment reference value (Mref) of the cylinder (1), a fuel error, in particular a high fuel error, is set.

7. Method according to any of claims 1 to 6,
**characterised in that**
- depending on a comparison of the moment value to the moment reference value in accordance with a moment equation method (83), a first correction of the amount of fuel injected (ftiM1) is determined, and
- depending on a comparison of the lambda value to the lambda reference value in accordance with a lambda equation method (84), a second correction of the amount of fuel injected (ftiλ1) is determined, and
- depending on a comparison (85) of the first correction of the amount of fuel injected (ftiM1) to the second correction of the amount of fuel injected (ftiλ1), the type of the air/fuel mixture error (87) is equated to a fuel pathway error of the cylinder (1) or to an air pathway erroe of the cylinder (1), wherein
- if the first correction of the amount of fuel injected (ftiM1) is substantially equal to the second correction of the amount of fuel injected (ftiλ1), the type of the air/fuel mixture error (87) is equated to a fuel pathway error,
- if the first correction of the amount of fuel injected (ftiM1) is different from the second correction of the amount of fuel injected (ftiλ1), the type of the air/fuel mixture error (87) is equated to an air pathway error.

8. Method according to claim 7,
**characterised in that**
- if the first correction of the amount of fuel injected (ftiM1) is greater than the second correction of the amount of fuel injected (ftiλ1), the type of the air/fuel mixture error (87) is equated to a low air error,
- if the first correction of the amount of fuel injected (ftiM1) is smaller than the second correction of the amount of fuel injected (ftiλ1), the type of the air/fuel mixture error (87) is equated to a high air error.

## Revendications

1. Procédé de correction d'une quantité d'injection dans le cas d'une erreur de trajet d'air (44) d'un cylindre (1) d'un moteur à combustion interne (5) d'un véhicule à moteur,
**caractérisé en ce que**
une quantité d'injection du cylindre (1) est corrigée, dans lequel
- une grandeur de moment (M1) du cylindre (1) est déterminée,
- une grandeur lambda (λ1) du cylindre (1) est déterminée,
- une grandeur de référence de moment (Mref) ainsi qu'une grandeur de référence lambda (λref) sont déterminées, et
- en fonction d'une comparaison de la grandeur de moment (M1) à la grandeur de référence de moment (Mref) et en fonction d'une comparaison de la grandeur lambda (λ1) à la grandeur de référence lambda (λref), le type d'une erreur de mélange air-carburant est défini comme égal à l'erreur de trajet de carburant (45) du cylindre (1) ou égal à l'erreur de trajet d'air (44) du cylindre (1), dans lequel l'erreur de trajet d'air signifie un écart erroné entre une amenée de quantité d'air réelle et une amenée de quantité d'air de consigne au cylindre (1), et dans lequel il n'est pas possible dans le cas d'une erreur de trajet d'air d'égaliser par une correction de la quantité de carburant uniquement aussi bien les grandeurs de moment (M1, M2, M3, M4) que les grandeurs lambda (λ1, λ2, λ3, λ4), **caractérisé en ce que**
- dans le cas d'une erreur de trajet d'air (44) avec un faible écart (Δλ1) entre la grandeur lambda (λ1) du cylindre (1) et la grandeur de référence lambda (λref) jusqu'à une tolérance (Δλ1G) entre la grandeur lambda (λ1) et la grandeur de référence lambda (λref), la quantité d'injection du cylindre (1) est modifiée en fonction de l'erreur de trajet d'air (44) en une approximation et/ou une égalisation d'une contribution de moment du cylindre (1) par rapport à des contributions de moment d'autres cylindres (2, 3, 4) du moteur à combustion interne (5) en augmentant l'écart (Δλ1) entre la grandeur lambda (λ1) du cylindre (1) et la grandeur de référence lambda (λref) par rapport à des grandeurs lambda d'autres cylindres (2, 3, 4) du moteur à combustion interne (5),
- dans le cas d'une erreur de trajet d'air (44) avec la tolérance (Δλ1G) entre la grandeur lambda (λ1) du cylindre (1) et la grandeur de référence lambda (λref), la quantité d'injection du cylindre (1) est modifiée en fonction de l'erreur de trajet d'air (44) en une stabilisation de la grandeur lambda (λ1).

2. Procédé selon la revendication 1,
**caractérisé en ce que**
- en cas de présence de l'erreur de trajet d'air (44) et de la tolérance (Δλ1G) de la grandeur lambda (λ1), une erreur (49) pertinente au niveau du confort du trajet d'air (12) du cylindre (1) est définie,
- en cas de présence de l'erreur de trajet d'air (44) et d'un dépassement de la tolérance (Δλ1G) de la grandeur lambda (λ1), une erreur (52) pertinente au niveau des gaz d'échappement du trajet d'air (12) du cylindre (1) est définie.

3. Procédé selon la revendication 1 ou 2,
**caractérisé en ce que**
la grandeur de moment (M1) du cylindre (1) dépend d'une valeur de silence de fonctionnement du cylindre (1).

4. Procédé selon une des revendications 1 à 3,
**caractérisé en ce que**
la grandeur de moment (M1) du cylindre (1) dépend d'une durée de segment par rapport au cylindre (1) sur un vilebrequin (6) du moteur à combustion interne (5).

5. Procédé selon une des revendications 1 à 4,
**caractérisé en ce que**
la grandeur de référence de moment (Mref) du cylindre (1) dépend des grandeurs de moment des autres cylindres (2, 3, 4) du moteur à combustion interne (5) et/ou la grandeur de référence lambda (λref) dépend des grandeurs lambda des autres cylindres (2, 3, 4) du moteur à combustion interne (5).

6. Procédé selon une des revendications 1 à 5,
**caractérisé en ce que**
- dans le cas d'une grandeur lambda (λ1) du cylindre (1) qui est décalée en direction d'un mélange riche par comparaison à la grandeur de référence lambda (λref) du cylindre (1), ainsi que d'une grandeur de moment (M1) du cylindre (1) qui est décalée en direction d'une contribution de moment plus faible par comparaison à la grandeur de référence de moment (Mref) du cylindre (1), une erreur d'air, notamment une erreur d'air inférieure, est définie,
- dans le cas d'une grandeur lambda (λ1) du cylindre (1) qui est décalée en direction d'un mélange pauvre par comparaison à la grandeur de référence lambda (λref) du cylindre (1), ainsi que d'une grandeur de moment (M1) du cylindre (1) qui est décalée en direction d'une contribution de moment plus élevée par comparaison à la grandeur de référence de moment (Mref) du cylindre (1), une erreur d'air, notamment une erreur d'air supérieure, est définie,
- dans le cas d'une grandeur lambda (λ1) du cylindre (1) qui est décalée en direction d'un mélange pauvre par comparaison à la grandeur de référence lambda (λref) du cylindre (1), ainsi que d'une grandeur de moment (M1) du cylindre (1) qui est décalée en direction d'une contribution de moment plus faible par comparaison à la grandeur de référence de moment (Mref) du cylindre (1), une erreur de carburant, notamment une erreur de carburant inférieure, est définie,
- dans le cas d'une grandeur lambda (λ1) du cylindre (1) qui est décalée en direction d'un mélange riche par comparaison à la grandeur de référence lambda (λref) du cylindre (1), ainsi que d'une grandeur de moment (M1) du cylindre qui est essentiellement égale par comparaison à la grandeur de référence de moment (Mref) du cylindre (1), une erreur de carburant, notamment une erreur de carburant supérieure, est définie.

7. Procédé selon une des revendications 1 à 6,
**caractérisé en ce que**
- une première correction de quantité d'injection (ftiM1) est déterminée en fonction d'une comparaison de la grandeur de moment à la grandeur de référence de moment conformément à un procédé d'égalisation de moments (83) et
- une seconde correction de quantité d'injection (ftiλ1) est déterminée en fonction d'une comparaison de la grandeur lambda à la grandeur de référence lambda conformément à un procédé d'égalisation lambda (84) et
- le type de l'erreur de mélange air-carburant (87) est défini comme égal à une erreur de trajet de carburant du cylindre (1) ou égal à une erreur de trajet d'air du cylindre (1) en fonction d'une comparaison (85) de la première correction de quantité d'injection (ftiM1) à la seconde correction de quantité d'injection (ftiλ1),
dans lequel
- lorsque la première correction de quantité d'injection (ftiM1) est essentiellement égale à la seconde correction de quantité d'injection (ftiλ1), le type de l'erreur de mélange air-carburant (87) est défini comme égal à une erreur de trajet de carburant,
- lorsque la première correction de quantité d'injection (ftiM1) est différente de la seconde correction de quantité d'injection (ftiλ1), le type de l'erreur de mélange air-carburant (87) est défini comme égal à une erreur de trajet d'air.

8. Procédé selon la revendication 7,
**caractérisé en ce que**
- lorsque la première correction de quantité d'injection (ftiM1) est supérieure à la seconde correction de quantité d'injection (ftiλ1), le type de l'erreur de mélange air-carburant (87) est défini comme égal à une erreur d'air inférieure,
- lorsque la première correction de quantité d'injection (ftiM1) est inférieure à la seconde correction de quantité d'injection (ftiλ1), le type de l'erreur de mélange air-carburant (87) est défini comme égal à une erreur d'air supérieure.
